# EUROPEAN PATENT SPECIFICATION

(11) **EP 3 422 800 B1**
(45) Date of publication and mention of the grant of the patent: **15.05.2024**
(21) Application number: 18180238.0
(22) Date of filing: 27.06.2018
(51) Int. Cl.: H04W 76/16, H04W 36/00, H04W 36/14

(54) **METHOD, DEVICE AND SYSTEM FOR ESTABLISHING CALL CONNECTION**
VERFAHREN, VORRICHTUNG UND SYSTEM ZUR HERSTELLUNG EINER RUFVERBINDUNG
PROCÉDÉ, DISPOSITIF ET SYSTÈME D'ÉTABLISSEMENT DE CONNEXION D'APPEL

(30) Priority: 28.06.2017 CN 201710508377
(43) Date of publication of application: 02.01.2019
(73) Proprietor: Beijing Xiaomi Mobile Software Co., Ltd., Beijing 100085 (CN)
(72) Inventor: CUI, Hengbin, Haidan District Beijing, 100085 (CN)
(74) Representative: Hughes, Andrea Michelle

(56) References cited:
- WO-A1-2010/019364
- WO-A1-2011/120030
- US-A1- 2012 122 459
- US-A1- 2012 302 239
- "Digital cellular telecommunications system (Phase 2+) (GSM); Universal Mobile Telecommunications System (UMTS); LTE; Circuit Switched (CS) fallback in Evolved Packet System (EPS); Stage 2 (3GPP TS 23.272 version 14.0.0 Release 14)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP SA, no. V14.0.0 12 May 2017 (2017-05-12), pages 1-106, XP014291326, Retrieved from the Internet: URL:http://www.etsi.org/deliver/etsi_ts/12 3200_123299/123272/14.00.00_60/ts_123272v1 40000p.pdf [retrieved on 2017-05-12]

## Description

### CROSS-REFERENCE TO RELATED APPLICATIONS

This application is based on and claims priority to Chinese Patent Application No. 201710508377.1, filed on June 28, 2017.

### TECHNICAL FIELD

The present disclosure relates to the field of communication technology, and more particularly, to methods and devices for establishing a call connection.

### BACKGROUND

With the development of communication technology, a variety of communication networks have emerged, such as a long term evolution (LTE) network, a 3rd-Generation wireless telephone technology (3G) network and a 2-Generation wireless telephone technology (2G) network. The 2G network and 3G network are circuit switched (CS) networks. A terminal using the LTE technology is called a LTE terminal. When the LTE terminal needs to perform a call service, the LTE terminal usually establishes a call connection with a CS network device in the CS network through a LTE network device in the LTE network, and performs the call service through the CS network device.

In the related art, an LTE terminal may need to send a plurality of messages to an LTE network device to determine a target CS network device and establish a call connection with the target CS network device. Therefore, it takes a long time for the LTE terminal to establish the call connection, and the efficiency of establishing the call connection is low.

US20120302239A1 discloses an architecture that can provide enhancement with respect to circuit switched fall back. When user equipment is not in a radio resource control connected state at the time of a circuit switched fall back call, the radio resource control connection can be at least partially avoided by responding to a radio resource control connection request message with a radio resource control connection reject message that includes target cell reselection information.

XP14291326 directs to an explanatory guide regarding GSM, UMTS, LTE, CS, and EPS.

US20120122459A1 discloses a method for voice call fallback to a circuit switched (CS) domain. The method includes receiving a Service Request message from a calling user equipment (UE), where the Service Request message includes called number information of a voice call in a CS domain, instructing an evolved NodeB (eNB) to initiate circuit switched fallback (CSFB) handover; receiving a Handover Request message from the eNB, where the Handover Request message includes information required for CS handover, selecting a mobile switching center (MSC) and sending a packet switched (PS) to CS Handover Request message to the MSC, where the PS to CS Handover Request message carries information required for the CS handover and a called number so that the MSC calls a called UE.

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

Aspects of the disclosure provide a method for establishing a call connectionas defined by claim 1.

In an example, the RRC connection request message includes information on causes of establishment that includes the identification configured to request to perform the CS call service.

According to an embodiment, sending the RRC connection request message to the LTE network device includes sending the RRC connection request message to the LTE network device through a Common Control Channel (CCCH). Also, establishing the RRC bearer according to the instruction of the LTE network device includes receiving an RRC connection establishment message sent by the LTE network device through the CCCH, wherein the RRC connection establishment message includes information of a Dedicated Control Channel (DCCH); and establishing the DCCH with the LTE network device according to the information of the DCCH in the RRC connection establishment message, wherein the RRC bearer includes the DCCH.

[deleted].

Aspects of the disclosure also provide another method for establishing a call connection as defined by claim 3.

In an example, the RRC connection request message includes information on causes of establishment that includes the identification configured to request to perform the CS call service.

According to an embodiment, receiving the RRC connection request message sent by the LTE terminal includes receiving the RRC connection request message sent by the LTE terminal through a Common Control Channel CCCH, wherein instructing the LTE terminal to establish the RRC bearer includes sending an RRC connection establishment message to the LTE terminal through the CCCH, such that the LTE terminal establishes a Dedicated Control Channel (DCCH) according to information of the DCCH in the RRC connection establishment message, wherein the RRC bearer includes the DCCH.

[deleted].

Aspects of the disclosure also provide a device for establishing a call connection, as defined by claims 5 and 7.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram of an application scenario of a method for establishing a call connection according to an exemplary embodiment of the present disclosure.
Fig. 2 is a flow chart illustrating a method for establishing a call connection according to an exemplary embodiment of the present disclosure.
Fig. 3 is a flow chart illustrating a method for establishing a call connection according to another exemplary embodiment of the present disclosure.
Fig. 4 is a flow chart illustrating a method for establishing a call connection according to another exemplary embodiment of the present disclosure.
Fig. 5 is a block diagram illustrating a device for establishing a call connection according to an exemplary embodiment of the present disclosure.
Fig. 6 is a block diagram illustrating a device for establishing a call connection according to another exemplary aspect of the present disclosure.
Fig. 7 is a block diagram illustrating a device for establishing a call connection according to another exemplary embodiment of the present disclosure.
Fig. 8 is a schematic diagram illustrating a device for establishing a call connection according to an exemplary embodiment of the present disclosure.
Fig. 9 is a schematic diagram illustrating a device for establishing a call connection according to another exemplary embodiment of the present disclosure.

The specific embodiments of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific embodiments.

### DETAILED DESCRIPTION

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of illustrative aspects do not represent all implementations consistent with the disclosure. Instead, they are merely examples of apparatuses and methods consistent with aspects related to the disclosure as recited in the appended claims.

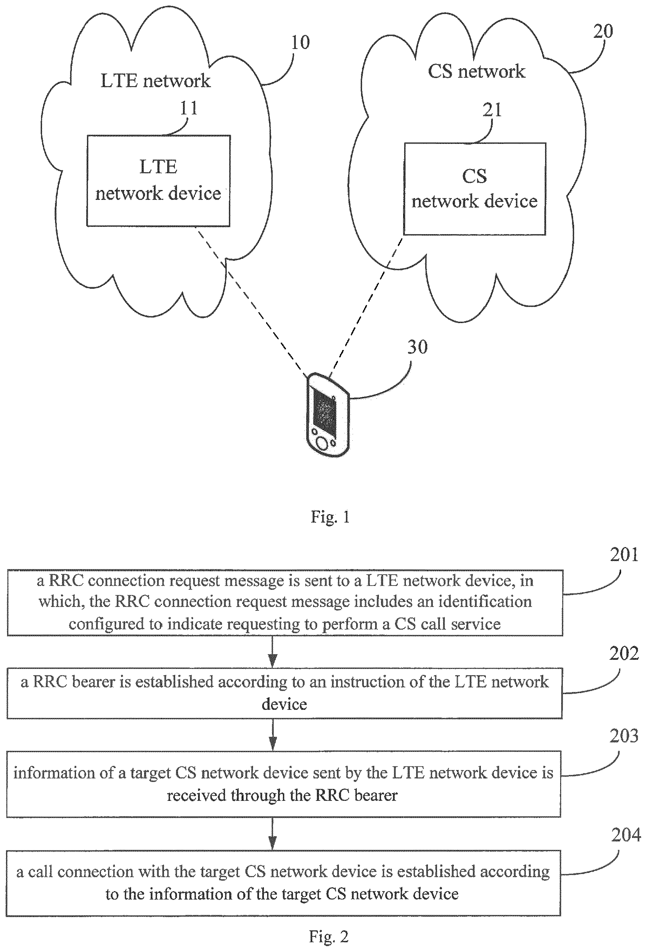

Fig. 1 is a schematic diagram of an application scenario of a method for establishing a call connection according to an aspect of the present disclosure. As illustrated in Fig. 1, a LTE network 10 includes a LTE network device 11, and a CS network 20 includes a CS network device 21. A LTE terminal 30 and the LTE network device 11 can communicate with each other through a CCCH, and the LTE terminal 30 and the CS network device 21 can communicate with each other through a CCCH.

For example, the CS network 20 may be a communication network with an emerging degree lower than the LTE network 10 (i.e., the LTE network appears later than the CS network), such as a 2G network, a 2.5G (a wireless technology between 2G and 3G) network or a 3G network. The network device in the 2G network adopts a global system for mobile communication (GSM) technology, and the network device in the 2.5G network adopts an enhanced data rate for GSM evolution (EDGE) technology.

Fig. 2 is a flow chart illustrating a method for establishing a call connection according to an embodiment of the present disclosure. The method for establishing the call connection can be applied to the LTE terminal in Fig. 1. As illustrated in Fig. 2, the method for establishing the call connection includes the following:

At block 201, a RRC connection request message is sent to a LTE network device, in which, the RRC connection request message includes an identification configured to indicate requesting to perform a CS call service.

At block 202, a RRC bearer is established according to an instruction of the LTE network device.

At block 203, information of a target CS network device sent by the LTE network device is received through the RRC bearer.

At block 204, a call connection with the target CS network device is established according to the information of the target CS network device.

As described above, with the method for establishing the call connection according to this aspect of the present disclosure, since the RRC connection request message sent by the LTE terminal to the LTE network device includes the identification configured to indicate the CS call service, after the LTE network device receives the RRC connection request message, the LTE network device can determine that the LTE terminal needs to perform the CS call service, and the LTE network device can directly instruct the LTE terminal to establish the RRC bearer, and can send the information of the target CS network device to the LTE terminal through the RRC bearer, such that the LTE terminal can determine the target CS network device and establish the call connection with the target CS network device only by sending one RRC connection request message to the LTE network device. Therefore, the time taken by the LTE terminal to establish the call connection is reduced, and the efficiency of the LTE terminal establishing the call connection is improved.

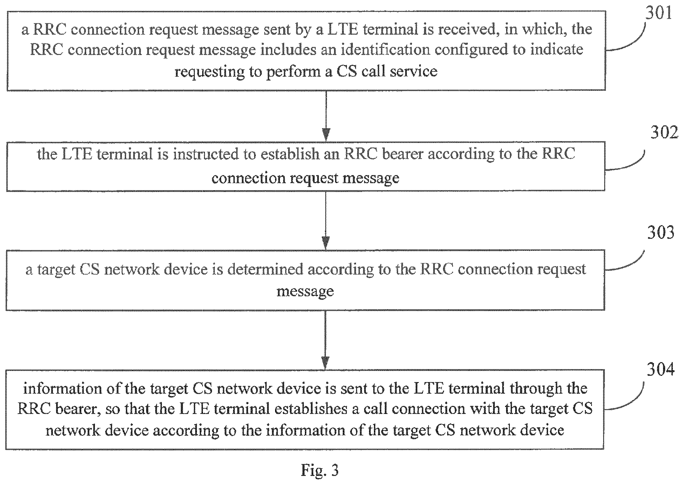

Fig. 3 is a flow chart illustrating a method for establishing a call connection according to another embodiment of the present disclosure. This method for establishing the call connection can be applied to the LTE network device in Fig. 1. As illustrated in Fig. 3, the method for establishing the call connection includes the following:

At block 301, a RRC connection request message sent by a LTE terminal is received, in which, the RRC connection request message includes an identification configured to indicate requesting to perform a CS call service.

At block 302, the LTE terminal is instructed to establish an RRC bearer according to the RRC connection request message.

At block 303, a target CS network device is determined according to the RRC connection request message.

At block 304, information of the target CS network device is sent to the LTE terminal through the RRC bearer, so that the LTE terminal establishes a call connection with the target CS network device according to the information of the target CS network device.

As described above, with the method for establishing the call connection according to this embodiment of the present disclosure, since the RRC connection request message sent by the LTE terminal to the LTE network device includes the identification configured to indicate the CS call service, after the LTE network device receives the RRC connection request message, the LTE network device can determine that the LTE terminal needs to perform the CS call service, and the LTE network device can directly instruct the LTE terminal to establish the RRC bearer, and can send the information of the target CS network device to the LTE terminal through the RRC bearer, such that the LTE terminal can determine the target CS network device and establish the call connection with the target CS network device only by sending one RRC connection request message to the LTE network device. Therefore, the time taken by the LTE terminal to establish the call connection is reduced, and the efficiency of the LTE terminal establishing the call connection is improved.

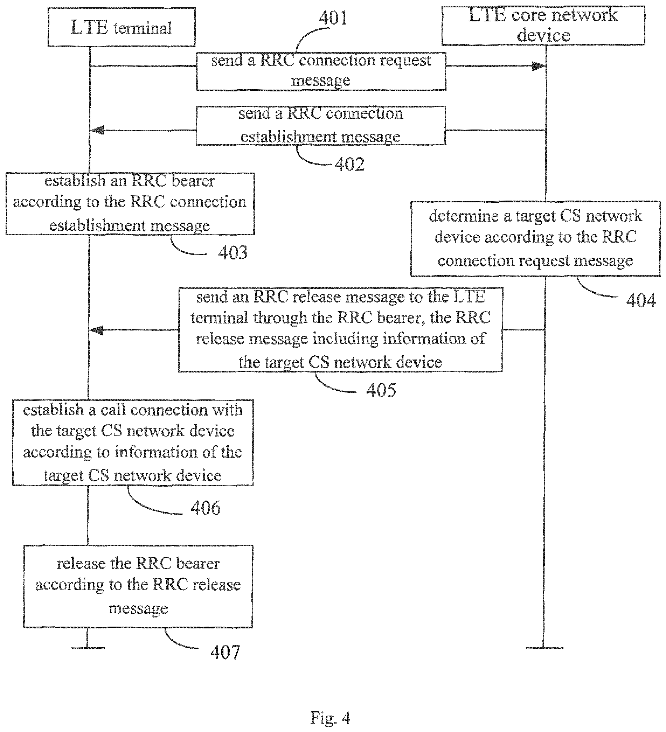

Fig. 4 is a flow chart illustrating a method for establishing a call connection according to the embodiment of the invention. In this embodiment, it takes the method for establishing the call connection being applied to the application scenario illustrated in Fig. 1 as an example. As illustrated in Fig.4, the method for establishing the call connection includes the following:
At block 401, the LTE terminal sends a RRC connection request message to the LTE network device.

In at least one embodiment of the present disclosure, the LTE terminal may be a calling LTE terminal, and the LTE terminal may also be a called LTE terminal. For example, when a user uses the calling LTE terminal, the user may operate on the calling LTE terminal, so that the calling LTE terminal can determine that it needs to perform the CS call service currently. When the called LTE terminal receives an incoming call, the called LTE terminal can determine that it needs to perform the CS call service currently. When the LTE terminal determines that it needs to perform the CS call service currently, the LTE terminal sends the RRC connection request message to the LTE network device through the CCCH.

The RRC connection request message includes the identification configured to indicate requesting to perform the CS call service. For example, the RRC connection request message includes information on causes of establishment, and the information on causes of establishment includes the identification configured to indicate requesting to perform the CS call service. In an actual application, the identification of the CS call service is also included in other information in the RRC connection request message, which is not limited in aspects of the present disclosure.

The information on causes of establishment may be 10101011, in which, "1011" is the identification configured to indicate requesting to perform the CS call service, and "1010" is an identification configured to indicate requesting to establish the RRC connection. Therefore, "10101011"can be configured to indicate both establishing the RRC connection and performing the CS call service. Alternatively, the information on causes of establishment may be 1111, and "1111" may be the identification configured to indicate both requesting to establish the RRC connection and requesting to perform the CS call service.

At block 402, the LTE network device sends a RRC connection establishment message to the LTE terminal.

After the LTE network device receives the RRC connection request message, the LTE network device can determine that the LTE terminal needs to establish the RRC bearer with the LTE network device currently, and that the LTE terminal needs to perform the call service through the CS network device. In this case, the LTE network device may assign a DCCH for the LTE terminal, and determine the RRC connection establishment message according to information of the DCCH, and send the RRC connection establishment message to the LTE terminal through the CCCH.

For example, the RRC connection establishment message may include the information of the DCCH that the LTE network device assigns to the LTE terminal. For example, the information of the DCCH may include an identification of the DCCH. In the actual application, the information of the DCCH may not be limited to the identification of the DCCH, and aspects of the present disclosure are not limited thereto. The RRC connection establishment message may be configured to instruct the LTE terminal to establish the RRC bearer according to the information of the DCCH.

At block 403, the LTE terminal establishes the RRC bearer according to the RRC connection establishment message.

After the LTE terminal receives the RRC connection establishment message, the LTE terminal can extract the information of the DCCH from the RRC connection establishment message, and establish the DCCH according to the information of the DCCH, thus completing establishing the RRC bearer. After the RRC bearer is established, the LTE terminal and the LTE network device can communicate with each other through the RRC bearer.

At block 404, the LTE network device determines a target CS network device according to the RRC connection request message.

Since the LTE network device does not have a call function, while the CS network device has the call function, after the LTE network device receives the RRC connection request message and determines the identification configured to indicate requesting to perform the CS call service in the RRC connection request message, the LTE network device needs to select one CS network device from at least one CS network device that the LTE network device can detect as the target CS network device that needs to establish the call connection with the LTE terminal.

At block 405, the LTE network device sends an RRC release message to the LTE terminal through the RRC bearer, in which the RRC release message includes information of the target CS network device.

After the LTE network device determines the target CS network device and sends the RRC connection establishment message to the LTE terminal, the LTE network device can send the RRC release message to the LTE terminal through the RRC bearer. The RRC release message may include the information of the target CS network device. For example, the information of the target CS network device may include an identification of the target CS network device. In at least one embodiment, the information of the target CS network device may also include other information, which is not limited in aspects of the present disclosure.

At block 406, the LTE terminal establishes a call connection with the target CS network device according to information of the CS network device.

After the LTE terminal receives the RRC release message, the LTE terminal can extract the information of the target CS network device from the RRC release message, and determine the target CS network device according to the information of the target CS network device, and thus establish the call connection with the target CS network device. Since the CS network device has the call function, the LTE terminal can make the call through the target CS network device after the LTE terminal establishes the call connection with the target CS network device.

At block 407, the LTE terminal releases the RRC bearer according to the RRC release message.

The RRC release message received by the LTE terminal may be used to instruct the LTE terminal to release the RRC bearer established in block 403. Therefore, after the LTE terminal receives the RRC release message, the LTE terminal can release the RRC bearer established in block 403 according to the RRC release message.

In the related art, when the LTE terminal needs to perform the call service, the LTE terminal needs to send the RRC connection request message and an ESR message to the LTE network device. However, the two request messages need to occupy more network resources, and thus the network overhead is large, and signaling load in the network is also large. In an embodiment of the preset disclosure, the RRC connection request message sent by the LTE terminal includes the identification of the CS call service, so that the LTE terminal can determine the target CS network device and establish the call connection with the target CS network device only by sending one RRC connection request message to the LTE network device. Therefore, the time taken by the LTE terminal to establish the call connection is reduced, and the efficiency of the LTE terminal establishing the call connection is improved.

It should be noted that, in the related art, the ESR message sent by the LTE terminal is usually included in a RRC establishment completion message. In other words, in the related art, the LTE terminal needs to send the RRC connection request message and the RRC establishment completion message to the LTE network device. However, in embodiments of the present disclosure, the LTE terminal does not need to send the RRC establishment completion message.

Furthermore, in the related art, after the LTE terminal sends the RRC establishment completion message to the LTE network device, the LTE network device may further need to obtain multiple reference information of the LTE terminal (such as information related to authentication, and capability information of the LTE terminal) before sending the information of the target CS network device to the LTE terminal device. Moreover, it takes a long time for the LTE network device to perform a series of operations described above, and thus it may take a long time to receive the information of the target CS network device after the LTE terminal sends the RRC connection request message, the efficiency of the LTE terminal to establish the call connection with the target CS network device is low, and the LTE terminal may occur a dialing delay phenomenon. However, since the LTE network device has obtained the multiple reference information of the LTE after the LTE terminal starts up and connects to Internet, it is redundant to obtain multiple reference information of the LTE terminal after the LTE terminal sends the RRC establishment completion message to the LTE network device is redundant.

Therefore, in an embodiment of the present disclosure, after the LTE network device receives the RRC connection request message sent by the LTE terminal and sends the RRC connection establishment message to the LTE terminal, the LTE network device does not need to obtain the multiple reference information of the LTE terminal from the LTE terminal, but directly sends the RRC release message to the LTE terminal, such that the information of the target CS network device is sent to the LTE terminal rapidly, thereby reducing the dialing delay of the LTE terminal. Therefore, in an embodiment of the present disclosure, the number of times of information interactions between the LTE terminal and the LTE network device is small, thereby saving the network overhead, and accelerating a speed of establishing the call connection between the LTE terminal and the target CS network device.

As described above, with the method for establishing the call connection according to embodiments of the present disclosure, since the RRC connection request message sent by the LTE terminal to the LTE network device includes the identification configured to indicate the CS call service, after the LTE network device receives the RRC connection request message, the LTE network device can determine that the LTE terminal needs to perform the CS call service, and the LTE network device can directly instruct the LTE terminal to establish the RRC bearer, and can send the information of the target CS network device to the LTE terminal through the RRC bearer, such that the LTE terminal can determine the target CS network device and establish the call connection with the target CS network device only by sending the RRC connection request message to the LTE network device. Therefore, the time taken by the LTE terminal to establish the call connection is reduced, and the efficiency of the LTE terminal establishing the call connection is improved.

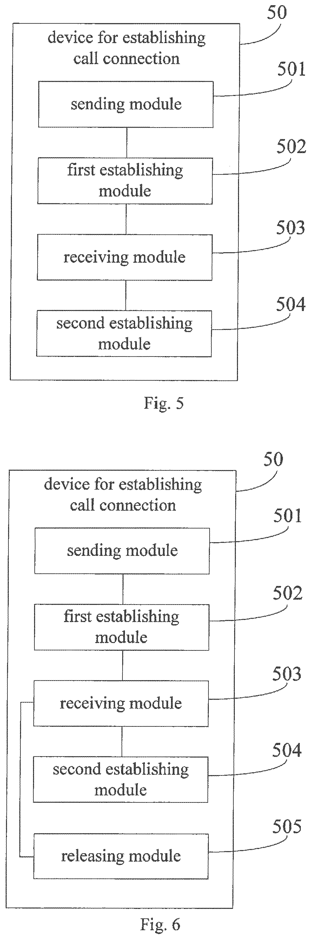

Fig. 5 is a block diagram illustrating a device for establishing a call connection according to an embodiment of the present disclosure. The LTE terminal in Fig. 1 may include the device for establishing the call connection. As illustrated in Fig. 5, the device 50 for establishing a call connection may include a sending module 501, a first establishing module 502, a receiving module 503 and a second establishing module 504.

The sending module 501 is configured to send a RRC connection request message to a LTE network device. The RRC connection request message includes an identification configured to indicate requesting to perform a CS call service.

The first establishing module 502 is configured to establish a RRC bearer according to an instruction of the LTE network device.

The receiving module 503 is configured to receive information of a target CS network device sent by the LTE network device through the RRC bearer.

The second establishing module 504 is configured to establish a call connection with the target CS network device according to the information of the target CS network device.

As described above, with the device for establishing the call connection according to embodiments of the present disclosure, the RRC connection request message sent by the sending module to the LTE network device includes the identification configured to indicate the CS call service. Therefore, after receiving the RRC connection request message, the LTE network device can determine that the LTE terminal needs to perform the CS call service currently, and the LTE network device can directly instruct the first establishing module to establish the RRC bearer, and can send the information of the target CS network device to the receiving module through the RRC bearer, such that the sending module only needs to send one RRC connection request message to the LTE network device, and then the target CS network device can be determined and the second establishing module can establish the call connection with the target CS network device. Therefore, the time taken by the LTE terminal to establish the call connection is reduced, and the efficiency of the LTE terminal establishing the call connection is improved.

In at least one embodiment, the RRC connection request message includes information on causes of establishment. The information on causes of establishment includes the identification configured to indicate requesting to perform the CS call service.

In at least one embodiment, the sending module 501 is further configured to send the RRC connection request message to the LTE network device through a CCCH. The first establishing module 502 is further configured to: receive an RRC connection establishment message sent by the LTE network device through the CCCH, in which, the RRC connection establishment message includes information of a DCCH; and establish the DCCH with the LTE network device according to the information of the DCCH in the RRC connection establishment message, in which, the RRC bearer includes the DCCH.

In at least one embodiment, the receiving module 503 is further configured to receive an RRC release message sent by the LTE network device through the RRC bearer. The RRC release message includes the information of the target CS network device.

Fig. 6 is a block diagram illustrating a device for establishing a call connection according to another embodiment of the present disclosure. As illustrated in Fig. 6, and on the basis of Fig. 5, the device 50 for establishing a call connection further includes a releasing module 505. The releasing module 505 is configured to release the RRC bearer according to the RRC release message.

As described above, with the device for establishing the call connection according to embodiments of the present disclosure, the RRC connection request message sent by the sending module to the LTE network device includes the identification configured to indicate the CS call service. Therefore, after receiving the RRC connection request message, the LTE network device can determine that the LTE terminal needs to perform the CS call service currently, and the LTE network device can directly instruct the first establishing module to establish the RRC bearer, and can send the information of the target CS network device to the receiving module through the RRC bearer, such that the sending module only needs to send one RRC connection request message to the LTE network device, and then the target CS network device can be determined and the second establishing module can establish the call connection with the target CS network device. Therefore, the time taken by the LTE terminal to establish the call connection is reduced, and the efficiency of the LTE terminal establishing the call connection is improved.

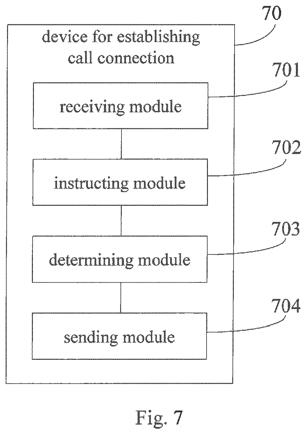

Fig. 7 is a block diagram illustrating a device for establishing a call connection according to another embodiment of the present disclosure. The LTE network device in Fig. 1 may include the device for establishing the call connection. As illustrated in Fig. 7, the device 70 for establishing a call connection may include a receiving module 701, an instructing module 702, a determining module 702 and a sending module 704.

The receiving module 701 is configured to receive a RRC connection request message sent by a LTE terminal. The RRC connection request message includes an identification configured to indicate requesting to perform a CS call service.

The instructing module 702 is configured to instruct the LTE terminal to establish an RRC bearer according to the RRC connection request message.

The determining module 703 is configured to determine a target CS network device according to the RRC connection request message.

The sending module 704 is configured to send information of the target CS network device to the LTE terminal through the RRC bearer, so that the LTE terminal establishes a call connection with the target CS network device according to the information of the target CS network device.

As described above, with the device for establishing the call connection according to embodiments of the present disclosure, the RRC connection request message received by the receiving module from the LTE terminal includes the identification configured to indicate the CS call service. Therefore, after receiving the RRC connection request message, the receiving module can determine that the LTE terminal needs to perform the CS call service currently, the instructing module can directly instruct the LTE terminal to establish the RRC bearer, and the sending module can send the information of the target CS network device to LTE terminal through the RRC bearer, such that the LTE terminal can determine the target CS network device and then establish the call connection with the target CS network device only by sending one RRC connection request message to the receiving module. Therefore, the time taken by the LTE terminal to establish the call connection is reduced, and the efficiency of the LTE terminal establishing the call connection is improved.

In at least one embodiment, the RRC connection request message includes information on causes of establishment. The information on causes of establishment includes the identification configured to indicate requesting to perform the CS call service.

In at least one embodiment, the receiving module 701 may be further configured to receive the RRC connection request message sent by the LTE terminal through a CCCH.

In at least one embodiment, the instructing module 702 may be further configured to send an RRC connection establishment message to the LTE terminal through the CCCH, so that the LTE terminal establishes a DCCH according to information of the DCCH in the RRC connection establishment message, in which, the RRC bearer includes the DCCH.

In at least one embodiment, the sending module 704 may be further configured to send an RRC release message to the LTE terminal through the RRC bearer. The RRC release message includes the information of the target CS network device, and the RRC release message is further configured to instruct the LTE terminal to release the RRC bearer.

As described above, with the device for establishing the call connection according to embodiments of the present disclosure, the RRC connection request message received by the receiving module from the LTE terminal includes the identification configured to indicate the CS call service. Therefore, after receiving the RRC connection request message, the receiving module can determine that the LTE terminal needs to perform the CS call service currently, the instructing module can directly instruct the LTE terminal to establish the RRC bearer, and the sending module can send the information of the target CS network device to LTE terminal through the RRC bearer, such that the LTE terminal can determine the target CS network device and then establish the call connection with the target CS network device only by sending one RRC connection request message to the receiving module. Therefore, the time taken by the LTE terminal to establish the call connection is reduced, and the efficiency of the LTE terminal establishing the call connection is improved.

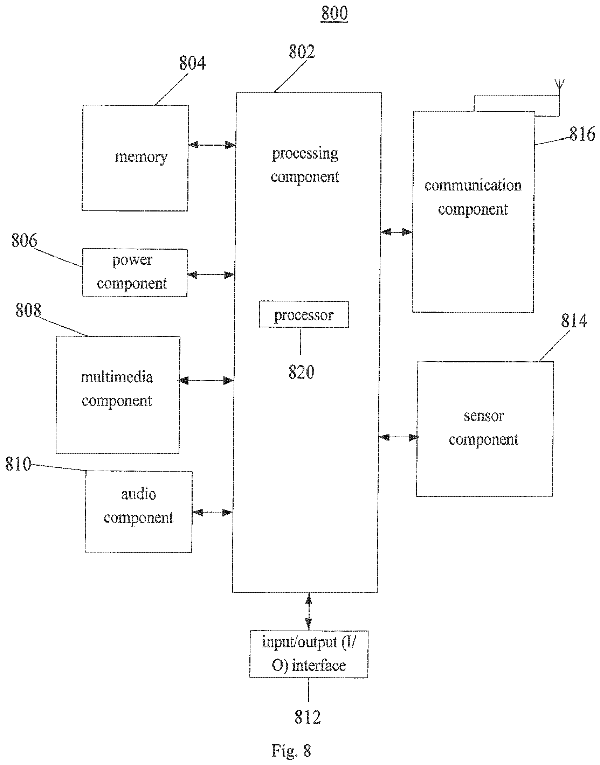

Fig. 8 is a block diagram illustrating a device 800 for establishing a call connection according to an embodiment of the present disclosure. The LTE terminal in Fig.1 may include the device for establishing the call connection. In at least one embodiment, the device 800 may be a mobile phone, a computer, a digital broadcasting terminal, a message transceiver device, a game console, a tablet device, a medical device, a fitness device and a personal digital assistant, etc.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and / or a rear-facing camera. When the device 800 is in an operating mode, such as a shooting mode or a video mode, the front-facing camera and / or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various embodiments of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA short) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the methods described above.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a read-only memory (ROM), a random access memory (RAM), a CD-ROM, a magnetic tape, a floppy disk, an optical data storage device, and the like.

A non-transitory computer-readable storage medium, having instructions that, when executed by the processor in the device 800, cause the device 800 to perform a method for establishing a call connection.

The method includes: sending a RRC connection request message to a LTE network device, in which, the RRC connection request message includes an identification configured to indicate requesting to perform a CS call service; establishing a RRC bearer according to an instruction of the LTE network device; receiving information of a target CS network device sent by the LTE network device through the RRC bearer; and establishing a call connection with the target CS network device according to the information of the target CS network device.

In at least one embodiment, the RRC connection request message includes information on causes of establishment. The information on causes of establishment includes the identification configured to indicate requesting to perform the CS call service.

In at least one embodiment, sending a RRC connection request message to a LTE network device includes sending the RRC connection request message to the LTE network device through a CCCH. Establishing a RRC bearer according to an instruction of the LTE network device includes: receiving an RRC connection establishment message sent by the LTE network device through the CCCH, in which, the RRC connection establishment message includes information of a DCCH; and establishing the DCCH with the LTE network device according to the information of the DCCH in the RRC connection establishment message, in which, the RRC bearer includes the DCCH.

In at least one embodiment, receiving information of a target CS network device sent by the LTE network device through the RRC bearer includes receiving an RRC release message sent by the LTE network device through the RRC bearer, in which, the RRC release message includes the information of the target CS network device.

In at least one embodiment, the method further includes releasing the RRC bearer according to the RRC release message.

As described above, with the device for establishing the call connection according to embodiments of the present disclosure, the RRC connection request message sent by the LTE terminal to the LTE network device includes the identification configured to indicate the CS call service. Therefore, after the LTE network device receives the RRC connection request message, the LTE network device can determine that the LTE terminal needs to perform the CS call service, and the LTE network device can directly instruct the LTE terminal to establish the RRC bearer, and can send the information of the target CS network device to the LTE terminal through the RRC bearer, such that that the LTE terminal can determine the target CS network device and establish the call connection with the target CS network device only by sending one RRC connection request message to the LTE network device. Therefore, the time taken by the LTE terminal to establish the call connection is reduced, and the efficiency of the LTE terminal establishing the call connection is improved.

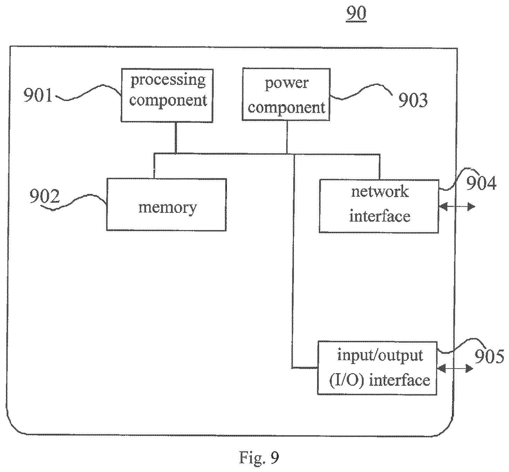

Fig. 9 is a block diagram illustrating a device 90 for establishing a call connection according to another embodiment of the present disclosure. The LTE network device in Fig. 1 may include the device for establishing the call connection. Referring to Fig. 9, the device 90 may include a processing component 901 and a memory resource represented by a memory 902. The processing component 901 further includes one or more processors. The memory resource is configured to store instructions executable by the processing component 901, such as application programs. The application program stored in the memory 902 may include one or more modules, each of which is corresponding to a set of instructions. In addition, the processing component 901 is configured to execute instructions to perform a method for establishing a call connection.

The method includes: receiving a RRC connection request message sent by a LTE terminal, in which, the RRC connection request message includes an identification configured to indicate requesting to perform a CS call service; instructing the LTE terminal to establish an RRC bearer according to the RRC connection request message; determining a target CS network device according to the RRC connection request message; and sending information of the target CS network device to the LTE terminal through the RRC bearer, so that the LTE terminal establishes a call connection with the target CS network device according to the information of the target CS network device.

In at least one embodiment, the RRC connection request message includes information on causes of establishment. The information on causes of establishment includes the identification configured to indicate requesting to perform the CS call service.

In at least one embodiment, receiving a RRC connection request message sent by a LTE terminal includes receiving the RRC connection request message sent by the LTE terminal through a CCCH. Instructing the LTE terminal to establish an RRC bearer includes sending an RRC connection establishment message to the LTE terminal through the CCCH, so that the LTE terminal establishes a DCCH according to information of the DCCH in the RRC connection establishment message, in which, the RRC bearer includes the DCCH.

In at least one embodiment, sending information of the target CS network device to the LTE terminal through the RRC bearer includes sending an RRC release message to the LTE terminal through the RRC bearer. The RRC release message includes the information of the target CS network device, and the RRC release message is further configured to instruct the LTE terminal to release the RRC bearer.

The device 90 further includes a power component 903 configured to execute power management of the device 90, a wired or wireless network interface 904 configured to connect the device 90 to the network, and an input/output (I/O) interface 905. The device 90 may operate based on an operating system stored in the memory 902, such as Windows Server TM, Mac OS XTM, Unix TM, Linux TM, Free BSDTM, or the like.

As described above, with the device for establishing the call connection according to embodiments of the present disclosure, the RRC connection request message sent by the LTE terminal to the LTE network device includes the identification configured to indicate the CS call service. Therefore, after the LTE network device receives the RRC connection request message, the LTE network device can determine that the LTE terminal needs to perform the CS call service, and the LTE network device can directly instruct the LTE terminal to establish the RRC bearer, and send the information of the target CS network device to the LTE terminal through the RRC bearer, so that the LTE terminal can determine the target CS network device and establish the call connection with the target CS network device only by sending a RRC connection request message to the LTE network device. Therefore, the time taken by the LTE terminal to establish the call connection is reduced, and the efficiency of the LTE terminal establishing the call connection is improved.

Aspects of the present disclosure provide a system for establishing a call connection. The system for establishing the call connection may include a LTE terminal and a LTE network device.

The LTE terminal may be the device for establishing the call connection illustrated in Fig. 5 or Fig. 6, and the LTE network device may be the device for establishing the call connection illustrated in Fig. 7. Alternatively, the LTE terminal may be the device for establishing the call connection illustrated in Fig. 8, and the LTE network device may be the device for establishing the call connection illustrated in Fig. 9.

The embodiments illustrated in Figs. 2 -4 may be realized by hardware, software, firmware or their combination. When implemented using the software, it can be implemented in whole or in part in a form of a program product, and the program product includes one or more instructions. The process or the functions described in the embodiments of the present disclosure can be generated in whole or in part when the instructions are loaded and executed on the processing component. The instructions can be stored in the readable storage medium of the processing component or can be transmitted from one readable storage medium to another readable storage medium. The storage medium can be a magnetic medium, an optical medium, or a semiconductor medium.

It should be noted that, the parts of the present disclosure relating to methods can be referred to corresponding parts relating to devices. The sequences of steps of the methods of the present disclosure can be adjusted appropriately and the steps can be changed accordingly. Any method that is readily apparent to those skilled in the art within the scope of technical solutions of the present disclosure is intended to be covered within the scope of the present invention as defined by the claims, which will not be described herein.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

## Claims

1. A method for establishing a call connection, comprising:
sending (401) a Radio Resource Control, RRC, connection request message to a Long Term Evolution, LTE, network device (11), wherein the RRC connection request message comprises information on causes of establishment that includes at least one of a first identification and a second identification, wherein the first identification is formed by a first part of requesting to establish an RRC connection and a second part of requesting to perform a Circuit Switched, CS, call service, and the second identification is configured to simultaneously indicate requesting to establish the RRC connection and requesting to perform the Circuit Switched (CS) call service;
establishing (403) a RRC bearer according to an instruction of the LTE network device;
receiving (405) an RRC release message sent by the LTE network device through the RRC bearer, wherein the RRC release message comprises information of the target CS network device;
establishing (406) a call connection with the target CS network device (21) according to the information of the target CS network device; and
releasing (407) the RRC bearer according to the RRC release message
wherein the LTE network device obtains multiple reference information of an LTE terminal after the LTE terminal starts up and connects to Internet, and the multiple reference information comprise information related to authentication of the LTE terminal, and capability information of the LTE terminal.

2. The method according to claim 1, wherein sending the RRC connection request message to the LTE network device (11) comprises sending the RRC connection request message to the LTE network device through a Common Control Channel, CCCH, wherein establishing the RRC bearer according to the instruction of the LTE network device comprises:
receiving an RRC connection establishment message sent by the LTE network device through the CCCH, wherein the RRC connection establishment message comprises information of a Dedicated Control Channel, DCCH; and
establishing the DCCH with the LTE network device according to the information of the DCCH in the RRC connection establishment message, wherein the RRC bearer comprises the DCCH.

3. A method for establishing a call connection, comprising:
receiving a Radio Resource Control, RRC, connection request message sent by a Long Term Evolution, LTE, terminal (30), wherein the RRC connection request message comprises information on causes of establishment that includes at least one of a first identification and a second identification, wherein the first identification is formed by a first part of requesting to establish an RRC connection and a second part of requesting to perform a Circuit Switched, CS, call service, and the second identification is configured to simultaneously indicate requesting to establish the RRC connection and requesting to perform the Circuit Switched, CS, call service;
instructing the LTE terminal to establish an RRC bearer according to the RRC connection request message;
determining a target CS network device according to the RRC connection request message; and
sending an RRC release message to the LTE terminal through the RRC bearer, such that the LTE terminal establishes the call connection with the target CS network device according to the RRC release message, wherein the RRC release message comprises information of the target CS network device,
and the RRC release message is further configured to instruct the LTE terminal to release the RRC bearer,
wherein the LTE network device obtains multiple reference information of an LTE terminal after the LTE terminal starts up and connects to Internet, and the multiple reference information comprise information related to authentication of the LTE terminal, and capability information of the LTE terminal.

4. The method according to claim 3, wherein receiving the RRC connection request message sent by the LTE terminal comprises receiving the RRC connection request message sent by the LTE terminal through a Common Control Channel CCCH,
wherein instructing the LTE terminal to establish the RRC bearer comprises sending an RRC connection establishment message to the LTE terminal through the CCCH, such that the LTE terminal establishes a Dedicated Control Channel, DCCH, according to information of the DCCH in the RRC connection establishment message, wherein the RRC bearer comprises the DCCH.

5. A device for establishing a call connection, comprising:
a processor (820); and
a memory (804) configured to store instructions executable by the processor,
wherein the processor is configured to:
send a Radio Resource Control, RRC, connection request message to a Long Term Evolution, LTE,
network device (11), wherein the RRC connection request message comprises information on causes of establishment that includes at least one of a first identification and a second identification, wherein the first identification is formed by a first part of requesting to establish an RRC connection and a second part of requesting to perform a Circuit Switched, CS,
call service, and the second identification is configured to simultaneously indicate requesting to establish the RRC connection and requesting to perform the Circuit Switched, CS, call service;
establish a RRC bearer according to an instruction of the LTE network device;
receive an RRC release message sent by the LTE network device through the RRC bearer, wherein the RRC release message comprises information of the target CS network device;
establish a call connection with the target CS network device according to the information of the target CS network device; and
release the RRC bearer according to the RRC release message,
wherein the LTE network device obtains multiple reference information of an LTE terminal after the LTE terminal starts up and connects to Internet, and the multiple reference information comprise information related to authentication of the LTE terminal, and capability information of the LTE terminal.

6. The device according to claim 5, wherein the processor is further configured to:
send the RRC connection request message to the LTE network device through a Common Control Channel, CCCH:
receive an RRC connection establishment message sent by the LTE network device through the CCCH, wherein the RRC connection establishment message comprises information of a Dedicated Control Channel, DCCH; and
establish the DCCH with the LTE network device according to the information of the DCCH in the RRC connection establishment message, wherein the RRC bearer comprises the DCCH.

7. A device for establishing a call connection, comprising:
a processor (820); and
a memory (804) configured to store instructions executable by the processor,
wherein the processor is configured to:
receive a Radio Resource Control, RRC, connection request message sent by a Long Term Evolution, LTE, terminal (30), wherein the RRC connection request message comprises information on causes of establishment that includes at least one of a first identification and a second identification, wherein the first identification is formed by a first part of requesting to establish an RRC connection and a second part of requesting to perform a Circuit Switched, CS,
call service, and the second identification is configured to simultaneously indicate requesting to establish the RRC connection and requesting to perform the Circuit Switched, CS, call service;
instruct the LTE terminal to establish an RRC bearer according to the RRC connection request message;
determine a target CS network device according to the RRC connection request message; and
send an RRC release message to the LTE terminal through the RRC bearer, such that the LTE terminal establishes the call connection with the target CS network device according to the RRC release message, wherein the RRC release message comprises information of the target CS network device, and the RRC release message is further configured to instruct the LTE terminal to release the RRC bearer
wherein the LTE network device obtains multiple reference information of an LTE terminal after the LTE terminal starts up and connects to Internet, and the multiple reference information comprise information related to authentication of the LTE terminal, and capability information of the LTE terminal.

8. The device according to claim 7, wherein the processor is further configured to:
receive the RRC connection request message sent by the LTE terminal through a Common Control Channel CCCH;
send an RRC connection establishment message to the LTE terminal through the CCCH, such that the LTE terminal establishes a Dedicated Control Channel, DCCH, according to information of the DCCH in the RRC connection establishment message, wherein the RRC bearer comprises the DCCH.

## Patentansprüche

1. Verfahren zum Einrichten einer Rufverbindung, umfassend:
Senden (401) einer Funkressourcensteuerungs-, RRC, Verbindungsanforderungsnachricht an eine Long Term Evolution, LTE, Netzvorrichtung (11), wobei die RRC-Verbindungsanforderungsnachricht Informationen über Einrichtungsgründe umfasst, die mindestens eine einer ersten Kennung und einer zweiten Kennung beinhalten, wobei die erste Kennung durch einen ersten Teil der Anforderung zum Einrichten einer RRC-Verbindung und einen zweiten Teil der Anforderung zum Durchführen eines leitungsvermittelten, CS, Rufdienstes gebildet wird und die zweite Kennung dazu konfiguriert ist, gleichzeitig die Anforderung zum Einrichten der RRC-Verbindung und die Anforderung zum Durchführen des leitungsvermittelten (CS) Rufdienstes anzuzeigen;
Einrichten (403) eines RRC-Trägers gemäß einer Anweisung der LTE-Netzvorrichtung;
Empfangen (405) einer von der LTE-Netzvorrichtung über den RRC-Träger gesendeten RRC-Freigabenachricht, wobei die RRC-Freigabenachricht Informationen über die Ziel-CS-Netzvorrichtung umfasst;
Einrichten (406) einer Rufverbindung mit der Ziel-CS-Netzvorrichtung (21) gemäß den Informationen der Ziel-CS-Netzvorrichtung; und
Freigeben (407) des RRC-Trägers gemäß der RRC-Freigabenachricht,
wobei die LTE-Netzvorrichtung mehrere Referenzinformationen eines LTE-Endgeräts erhält, nachdem das LTE-Endgerät gestartet worden ist und sich mit dem Internet verbunden hat, und die mehreren Referenzinformationen Informationen bezüglich einer Authentifizierung des LTE-Endgeräts und Kapazitätsinformationen des LTE-Endgeräts umfassen.

2. Verfahren nach Anspruch 1, wobei Senden der RRC-Verbindungsanforderungsnachricht an die LTE-Netzvorrichtung (11) Senden der RRC-Verbindungsanforderungsnachricht an die LTE-Netzvorrichtung über einen gemeinsamen Steuerungskanal, CCCH, umfasst,
wobei Einrichten des RRC-Trägers gemäß der Anweisung der LTE-Netzvorrichtung Folgendes umfasst:
Empfangen einer von der LTE-Netzvorrichtung über den CCCH gesendeten RRC-Verbindungseinrichtungsnachricht, wobei die RRC-Verbindungseinrichtungsnachricht Informationen über einen dedizierten Steuerungskanal, DCCH, umfasst; und
Einrichten des DCCH mit der LTE-Netzvorrichtung gemäß den Informationen des DCCH in der RRC-Verbindungseinrichtungsnachricht, wobei der RRC-Träger den DCCH umfasst.

3. Verfahren zum Einrichten einer Rufverbindung, umfassend:
Empfangen einer von einem Long Term Evolution, LTE, Endgerät (30) gesendeten Funkressourcensteuerungs-, RRC, Verbindungsanforderungsnachricht, wobei die RRC-Verbindungsanforderungsnachricht Informationen über Einrichtungsgründe umfasst, die mindestens eine einer ersten Kennung und einer zweiten Kennung beinhalten, wobei die erste Kennung durch einen ersten Teil der Anforderung zum Einrichten einer RRC-Verbindung und einen zweiten Teil der Anforderung zum Durchführen eines leitungsvermittelten, CS, Rufdienstes gebildet wird und die zweite Kennung dazu konfiguriert ist, gleichzeitig die Anforderung zum Einrichten der RRC-Verbindung und die Anforderung zum Durchführen des leitungsvermittelten (CS) Rufdienstes anzuzeigen;
Anweisen des LTE-Endgeräts, einen RRC-Träger gemäß der RRC-Verbindungsanforderungsnachricht einzurichten;
Bestimmen einer Ziel-CS-Netzvorrichtung gemäß der RRC-Verbindungsanforderungsnachricht; und
Senden einer RRC-Freigabenachricht an das LTE-Endgerät über den RRC-Träger, sodass das LTE-Endgerät die Rufverbindung mit der Ziel-CS-Netzvorrichtung gemäß der RRC-Freigabenachricht einrichtet, wobei die RRC-Freigabenachricht Informationen über die Ziel-CS-Netzvorrichtung umfasst,
und die RRC-Freigabenachricht weiter so konfiguriert ist, dass sie das LTE-Endgerät anweist, den RRC-Träger freizugeben,
wobei die LTE-Netzvorrichtung mehrere Referenzinformationen eines LTE-Endgeräts erhält, nachdem das LTE-Endgerät gestartet worden ist und sich mit dem Internet verbunden hat, und die mehreren Referenzinformationen Informationen bezüglich einer Authentifizierung des LTE-Endgeräts und Kapazitätsinformationen des LTE-Endgeräts umfassen.

4. Verfahren nach Anspruch 3, wobei Empfangen der vom LTE-Endgerät gesendeten RRC-Verbindungsanforderungsnachricht Empfangen der vom LTE-Endgerät über einen gemeinsamen Steuerungskanal, CCCH, gesendeten RRC-Verbindungsanforderungsnachricht umfasst,
wobei Anweisen des LTE-Endgeräts, den RRC-Träger einzurichten, Senden einer RRC-Verbindungseinrichtungsnachricht an das LTE-Endgerät über den CCCH umfasst, sodass das LTE-Endgerät einen dedizierten Steuerungskanal, DCCH, gemäß Informationen des DCCH in der RRC-Verbindungseinrichtungsnachricht einrichtet, wobei der RRC-Träger den DCCH umfasst.

5. Vorrichtung zum Einrichten einer Rufverbindung, umfassend:
einen Prozessor (820); und
einen Speicher (804), der dazu konfiguriert ist, vom Prozessor ausführbare Anweisungen zu speichern,
wobei der Prozessor für Folgendes konfiguriert ist:
Senden einer Funkressourcensteuerungs-, RRC, Verbindungsanforderungsnachricht an eine Long Term Evolution, LTE, Netzvorrichtung (11), wobei die RRC-Verbindungsanforderungsnachricht Informationen über Einrichtungsgründe umfasst, die mindestens eine einer ersten Kennung und einer zweiten Kennung beinhalten, wobei die erste Kennung durch einen ersten Teil der Anforderung zum Einrichten einer RRC-Verbindung und einen zweiten Teil der Anforderung zum Durchführen eines leitungsvermittelten, CS, Rufdienstes gebildet wird und die zweite Kennung dazu konfiguriert ist, gleichzeitig die Anforderung zum Einrichten der RRC-Verbindung und die Anforderung zum Durchführen des leitungsvermittelten, CS, Rufdienstes anzuzeigen;
Einrichten eines RRC-Trägers gemäß einer Anweisung der LTE-Netzvorrichtung;
Empfangen einer von der LTE-Netzvorrichtung über den RRC-Träger gesendeten RRC-Freigabenachricht, wobei die RRC-Freigabenachricht Informationen über die Ziel-CS-Netzvorrichtung umfasst;
Einrichten einer Rufverbindung mit der Ziel-CS-Netzvorrichtung gemäß den Informationen der Ziel-CS-Netzvorrichtung; und
Freigeben des RRC-Trägers gemäß der RRC-Freigabenachricht,
wobei die LTE-Netzvorrichtung mehrere Referenzinformationen eines LTE-Endgeräts erhält, nachdem das LTE-Endgerät gestartet worden ist und sich mit dem Internet verbunden hat, und die mehreren Referenzinformationen Informationen bezüglich einer Authentifizierung des LTE-Endgeräts und Kapazitätsinformationen des LTE-Endgeräts umfassen.

6. Vorrichtung nach Anspruch 5, wobei der Prozessor weiter für Folgendes konfiguriert ist:
Senden der RRC-Verbindungsanforderungsnachricht an die LTE-Netzvorrichtung über einen gemeinsamen Steuerungskanal, CCCH;
Empfangen einer von der LTE-Netzvorrichtung über den CCCH gesendeten RRC-Verbindungseinrichtungsnachricht, wobei die RRC-Verbindungseinrichtungsnachricht Informationen über einen dedizierten Steuerungskanal, DCCH, umfasst; und
Einrichten des DCCH mit der LTE-Netzvorrichtung gemäß den Informationen des DCCH in der RRC-Verbindungseinrichtungsnachricht, wobei der RRC-Träger den DCCH umfasst.

7. Vorrichtung zum Einrichten einer Rufverbindung, umfassend:
einen Prozessor (820); und
einen Speicher (804), der dazu konfiguriert ist, vom Prozessor ausführbare Anweisungen zu speichern,
wobei der Prozessor für Folgendes konfiguriert ist:
Empfangen einer von einem Long Term Evolution, LTE, Endgerät (30) gesendeten Funkressourcensteuerungs-, RRC, Verbindungsanforderungsnachricht, wobei die RRC-Verbindungsanforderungsnachricht Informationen über Einrichtungsgründe umfasst, die mindestens eine einer ersten Kennung und einer zweiten Kennung beinhalten, wobei die erste Kennung durch einen ersten Teil der Anforderung zum Einrichten einer RRC-Verbindung und einen zweiten Teil der Anforderung zum Durchführen eines leitungsvermittelten, CS, Rufdienstes gebildet wird und die zweite Kennung dazu konfiguriert ist, gleichzeitig die Anforderung zum Einrichten der RRC-Verbindung und die Anforderung zum Durchführen des leitungsvermittelten (CS) Rufdienstes anzuzeigen;
Anweisen des LTE-Endgeräts, einen RRC-Träger gemäß der RRC-Verbindungsanforderungsnachricht einzurichten;
Bestimmen einer Ziel-CS-Netzvorrichtung gemäß der RRC-Verbindungsanforderungsnachricht; und
Senden einer RRC-Freigabenachricht an das LTE-Endgerät über den RRC-Träger, sodass das LTE-Endgerät die Rufverbindung mit der Ziel-CS-Netzvorrichtung gemäß der RRC-Freigabenachricht einrichtet, wobei die RRC-Freigabenachricht Informationen über die Ziel-CS-Netzvorrichtung umfasst und die RRC-Freigabenachricht weiter dazu konfiguriert ist, das LTE-Endgerät anzuweisen, den RRC-Träger freizugeben,
wobei die LTE-Netzvorrichtung mehrere Referenzinformationen eines LTE-Endgeräts erhält, nachdem das LTE-Endgerät gestartet worden ist und sich mit dem Internet verbunden hat, und die mehreren Referenzinformationen Informationen bezüglich einer Authentifizierung des LTE-Endgeräts und Kapazitätsinformationen des LTE-Endgeräts umfassen.

8. Vorrichtung nach Anspruch 7, wobei der Prozessor weiter für Folgendes konfiguriert ist:
Empfangen der vom LTE-Endgerät über einen gemeinsamen Steuerungskanal, CCCH, gesendeten RRC-Verbindungsanforderungsnachricht;
Senden einer RRC-Verbindungseinrichtungsnachricht an das LTE-Endgerät über den CCCH, sodass das LTE-Endgerät einen dedizierten Steuerungskanal, DCCH, gemäß Informationen des DCCH in der RRC-Verbindungseinrichtungsnachricht einrichtet, wobei der RRC-Träger den DCCH umfasst.

## Revendications

1. Procédé d'établissement d'une connexion d'appel, comprenant :
l'envoi (401) d'un message de demande de connexion de commande de ressources radio, RRC, à un dispositif réseau (11) d'évolution à long terme, LTE, dans lequel le message de demande de connexion RRC comprend des informations sur les causes d'établissement qui incluent au moins une parmi une première identification et une seconde identification, dans lequel la première identification est formée par une première partie de demande d'établissement d'une connexion RRC et une seconde partie de demande d'exécution d'un service d'appel à commutation de circuits, CS, et la seconde identification est configurée pour indiquer simultanément une demande d'établissement de la connexion RRC et une demande d'exécution du service d'appel à commutation de circuits (CS) ;
l'établissement (403) d'une porteuse RRC selon une instruction du dispositif réseau LTE ;
la réception (405) d'un message de libération RRC envoyé par le dispositif réseau LTE via la porteuse RRC, dans lequel le message de libération RRC comprend des informations du dispositif réseau CS cible ;
l'établissement (406) d'une connexion d'appel avec le dispositif réseau CS cible (21) en fonction des informations du dispositif réseau CS cible ; et
la libération (407) de la porteuse RRC selon le message de libération RRC
dans lequel le dispositif réseau LTE obtient de multiples informations de référence d'un terminal LTE après le démarrage du terminal LTE et sa connexion à Internet, et les multiples informations de référence comprennent des informations relatives à une authentification du terminal LTE et des informations de capacité du terminal LTE.

2. Procédé selon la revendication 1, dans lequel l'envoi du message de demande de connexion RRC au dispositif réseau LTE (11) comprend l'envoi du message de demande de connexion RRC au dispositif réseau LTE via un canal de commande commun, CCCH,
dans lequel l'établissement de la porteuse RRC selon l'instruction du dispositif réseau LTE comprend :
la réception d'un message d'établissement de connexion RRC envoyé par le dispositif réseau LTE via le CCCH, dans lequel le message d'établissement de connexion RRC comprend des informations d'un canal de commande dédié, DCCH ; et
l'établissement du DCCH avec le dispositif réseau LTE selon les informations du DCCH dans le message d'établissement de connexion RRC, dans lequel la porteuse RRC comprend le DCCH.

3. Procédé d'établissement d'une connexion d'appel, comprenant :
la réception d'un message de demande de connexion de commande de ressources radio, RRC, envoyé par un terminal (30) d'évolution à long terme, LTE, dans lequel le message de demande de connexion RRC comprend des informations sur les causes d'établissement qui incluent au moins une parmi une première identification et une seconde identification, dans lequel la première identification est formée par une première partie de demande d'établissement d'une connexion RRC et une seconde partie de demande d'exécution d'un service d'appel à commutation de circuits, CS, et la seconde identification est configurée pour indiquer simultanément une demande d'établissement de la connexion RRC et une demande d'exécution du service d'appel à commutation de circuits, CS ;
l'ordre donné au terminal LTE d'établir une porteuse RRC selon le message de demande de connexion RRC ;
la détermination d'un dispositif réseau CS cible selon le message de demande de connexion RRC ; et
l'envoi d'un message de libération RRC au terminal LTE via la porteuse RRC, de telle sorte que le terminal LTE établisse la connexion d'appel avec le dispositif réseau CS cible conformément au message de libération RRC, dans lequel le message de libération RRC comprend des informations du dispositif réseau CS cible,
et le message de libération RRC est en outre configuré pour ordonner au terminal LTE de libérer la porteuse RRC,
dans lequel le dispositif réseau LTE obient de multiples informations de référence d'un terminal LTE après le démarrage du terminal LTE et sa connexion à Internet, et les multiples informations de référence comprennent des informations relatives à une authentification du terminal LTE, et des informations de capacité du terminal LTE.

4. Procédé selon la revendication 3, dans lequel la réception du message de demande de connexion RRC envoyé par le terminal LTE comprend la réception du message de demande de connexion RRC envoyé par le terminal LTE via un canal de commande commun CCCH,
dans lequel l'ordre donné au terminal LTE d'établir la porteuse RRC comprend l'envoi d'un message d'établissement de connexion RRC au terminal LTE via le CCCH, de telle sorte que le terminal LTE établisse un canal de commande dédié, DCCH, selon les informations du DCCH dans le message d'établissement de connexion RRC, dans lequel la porteuse RRC comprend le DCCH.

5. Dispositif pour établir une connexion d'appel, comprenant :
un processeur (820) ; et
une mémoire (804) configurée pour stocker des instructions exécutables par le processeur,
dans lequel le processeur est configuré pour :
envoyer un message de demande de connexion de commande de ressources radio, RRC, à un dispositif réseau (11) d'évolution à long terme, LTE, dans lequel le message de demande de connexion RRC comprend des informations sur les causes d'établissement qui incluent au moins une parmi une première identification et une seconde identification, dans lequel la première identification est formée par une première partie de demande d'établissement d'une connexion RRC et une seconde partie de demande d'exécution d'un service d'appel à commutation de circuits, CS, et la seconde identification est configurée pour indiquer simultanément une demande d'établissement de la connexion RRC et une demande d'exécution du service d'appel à commutation de circuits, CS ;
établir une porteuse RRC selon une instruction du dispositif réseau LTE ;
recevoir un message de libération RRC envoyé par le dispositif réseau LTE via la porteuse RRC, dans lequel le message de libération RRC comprend des informations du dispositif réseau CS cible ;
établir une connexion d'appel avec le dispositif réseau CS cible en fonction des informations du dispositif réseau CS cible ; et
libérer la porteuse RRC selon le message de libération RRC,
dans lequel le dispositif réseau LTE obient de multiples informations de référence d'un terminal LTE après le démarrage du terminal LTE et sa connexion à Internet, et les multiples informations de référence comprennent des informations relatives à une authentification du terminal LTE, et des informations de capacité du terminal LTE.

6. Dispositif selon la revendication 5, dans lequel le processeur est configuré pour :
envoyer le message de demande de connexion RRC au dispositif réseau LTE via un canal de commande commun, CCCH :
recevoir un message d'établissement de connexion RRC envoyé par le dispositif réseau LTE via le CCCH, dans lequel le message d'établissement de connexion RRC comprend des informations d'un canal de commande dédié, DCCH ; et
établir le DCCH avec le dispositif réseau LTE selon les informations du DCCH dans le message d'établissement de connexion RRC, dans lequel la porteuse RRC comprend le DCCH.

7. Dispositif pour établir une connexion d'appel, comprenant :
un processeur (820) ; et
une mémoire (804) configurée pour stocker des instructions exécutables par le processeur,
dans lequel le processeur est configuré pour :
recevoir un message de demande de connexion de commande de ressources radio, RRC, envoyé par un terminal (30) d'évolution à long terme, LTE, dans lequel le message de demande de connexion RRC comprend des informations sur les causes d'établissement qui incluent au moins une parmi une première identification et une seconde identification, dans lequel la première identification est formée par une première partie de demande d'établissement d'une connexion RRC et une seconde partie de demande d'exécution d'un service d'appel à commutation de circuits, CS, et la seconde identification est configurée pour indiquer simultanément une demande d'établissement de la connexion RRC et une demande d'exécution du service d'appel à commutation de circuits, CS ;
ordonner au terminal LTE d'établir une porteuse RRC selon le message de demande de connexion RRC ;
déterminer un dispositif réseau CS cible selon le message de demande de connexion RRC ; et
envoyer un message de libération RRC au terminal LTE via la porteuse RRC, de telle sorte que le terminal LTE établisse la connexion d'appel avec le dispositif réseau CS cible conformément au message de libération RRC, dans lequel le message de libération RRC comprend des informations du dispositif réseau CS cible, et le message de libération RRC est en outre configuré pour ordonner au terminal LTE de libérer la porteuse RRC
dans lequel le dispositif réseau LTE obient de multiples informations de référence d'un terminal LTE après le démarrage du terminal LTE et sa connexion à Internet, et les multiples informations de référence comprennent des informations relatives à une authentification du terminal LTE, et des informations de capacité du terminal LTE.

8. Dispositif selon la revendication 7, dans lequel le processeur est en outre configuré pour :
recevoir le message de demande de connexion RRC envoyé par le terminal LTE via un canal de commande commun CCCH ;
envoyer un message d'établissement de connexion RRC au terminal LTE via le CCCH, de telle sorte que le terminal LTE établisse un canal de commande dédié, DCCH, en fonction des informations du DCCH dans le message d'établissement de connexion RRC, dans lequel la porteuse RRC comprend le DCCH.
